# EUROPEAN PATENT APPLICATION

(11) **EP 4 787 579 A1**
(43) Date of publication of application: **05.08.2026**
(21) Application number: 26150961.6
(22) Date of filing: 09.01.2026
(51) Int. Cl.: H01M 50/271, H01M 50/249, H01M 50/262, H01M 50/242, B66F 9/075, B60S 5/06, B60L 53/80, B60L 50/60, B60L 50/64

(54) **METHOD FOR REPLACING ON-VEHICLE BATTERY, ON-VEHICLE BATTERY REPLACEMENT APPARATUS, AND CART USED FOR REPLACING ON-VEHICLE BATTERY**

(30) Priority: 31.01.2025 JP 2025014877
(71) Applicant: Toyota Jidosha Kabushiki Kaisha, Toyota-shi, Aichi-ken 471-8571 (JP)
(72) Inventor: IDESHIO, Yukihiko, Toyota-shi, 471-8571 (JP); MATSUSHITA, Taro, Toyota-shi, 471-8571 (JP); KOSHIKAWA, Tomoaki, Toyota-shi, 471-8571 (JP); NAKAMURA, Kota, Toyota-shi, 471-8571 (JP)
(74) Representative: D Young & Co LLP

(57) **Abstract**

The present disclosure relates to a replacing method for replacing an on-vehicle battery. The replacing method includes mounting the on-vehicle battery on a low-height cart (10) that has a height lower than a minimum ground clearance of a vehicle (30) when the on-vehicle battery is mounted, and moving the low-height cart (10) mounting the on-vehicle battery to under a floor of the vehicle (30) and replacing the on-vehicle battery.

## Description

### BACKGROUND

### Field

The present disclosure relates to a method, an apparatus, and a cart for replacing an on-vehicle battery of a vehicle.

### Background Art

Patent Document 1 discloses a battery replacement system for replacing a battery (accumulator) mounted on a vehicle. According to the battery replacement system disclosed in Patent Document 1, a space is provided under a road surface on which an electric vehicle travels for a traveling cart to travel, and the traveling cart travels through the space under the road surface to replace the battery of the electric vehicle.

### Prior Art Document

[Patent Document 1] JP 2011-168127 A

### SUMMARY

A method for replacing an on-vehicle battery mounted on a vehicle using a travel cart is known. In such a method of replacing the on-vehicle battery, if a dedicated space for running the travel cart is provided under the road surface, it is expected that the equipment will become larger and costs will also increase. One object of the present disclosure is to provide a technique that can reduce the size of the equipment and costs required when replacing an on-vehicle battery mounted on a vehicle using a cart.

A first aspect of the present disclosure relates to a replacing method for replacing an on-vehicle battery. The replacing method includes mounting the on-vehicle battery on a low-height cart that has a height lower than a minimum ground clearance of a vehicle when the on-vehicle battery is mounted, and moving the low-height cart mounting the on-vehicle battery to under a floor of the vehicle and replacing the on-vehicle battery.

A second aspect of the present disclosure relates to a cart for replacing an on-vehicle battery. The cart is configured to have a height lower than a minimum ground clearance of the vehicle when mounting the on-vehicle battery,.

A third aspect of the present disclosure relates to an on-vehicle battery replacement apparatus for replacing an on-vehicle battery. The on-vehicle battery replacement apparatus includes an on-vehicle battery and a cart equipped with a lift for lifting the on-vehicle battery. The cart is configured to have a height lower than a minimum ground clearance of the vehicle when the on-vehicle battery is mounted.

According to the technique of the present disclosure, a low-height cart is used to replace the on-vehicle battery. Since the height of the low-height cart when mounting the on-vehicle battery is lower than the minimum ground clearance of the vehicle, it can be moved under the floor of the vehicle without providing a dedicated space under the road surface. This allows the equipment to be made smaller, and reduces the cost of replacing on-vehicle battery.

### BRIEF DESCRIPTION OF THE DRAWINGS

FIG. 1 shows an on-vehicle battery replacement apparatus according to an embodiment of the present disclosure as seen from above.
FIG. 2 is shows the on-vehicle battery replacement apparatus according to the embodiment as seen from below.
FIG. 3 is a side view of the on-vehicle battery replacement apparatus according to the embodiment.
FIG. 4 is a diagram for explaining operation when the on-vehicle battery is replaced by the on-vehicle battery replacement apparatus according to the embodiment.
FIG. 5 is a diagram for explaining operation when the on-vehicle battery is replaced by the on-vehicle battery replacement apparatus according to the embodiment.
FIG. 6 is a diagram for explaining operation when the on-vehicle battery is replaced by the on-vehicle battery replacement apparatus according to the embodiment.
FIG. 7A is a diagram for explaining operation when the on-vehicle battery is replaced by the on-vehicle battery replacement apparatus according to the embodiment.
FIG. 7B is a diagram for explaining operation when the on-vehicle battery is replaced by the on-vehicle battery replacement apparatus according to the embodiment.
FIG. 8 shows the on-vehicle battery replacement apparatus according to a modified example as seen from below.
FIG. 9A is a diagram for explaining a modified example in which a step plate is used.
FIG. 9B is a diagram for explaining a modified example in which a step plate is used.

### DETAILED DESCRIPTION

Embodiments of the present disclosure will be described with reference to the accompanying drawings.

### 1. Configuration of Replacement Apparatus of On-Vehicle Battery

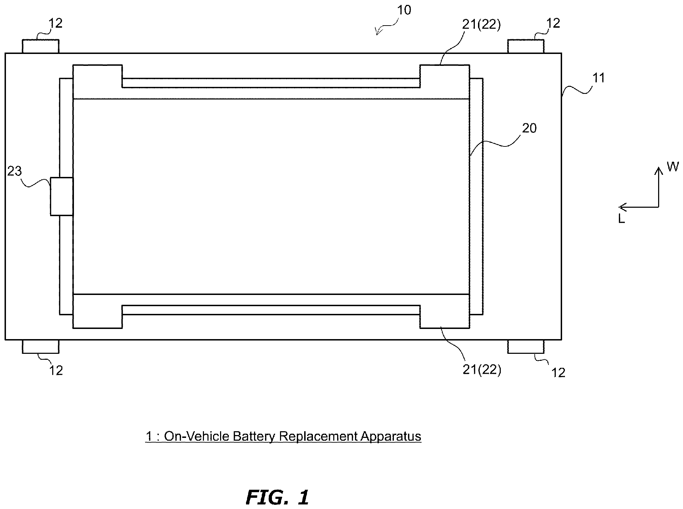

FIGS. 1 to 3 show an on-vehicle battery replacement apparatus 1 according to the embodiment. The on-vehicle battery replacement apparatus 1 includes an on-vehicle battery and a cart 10 used for replacing the on-vehicle battery.

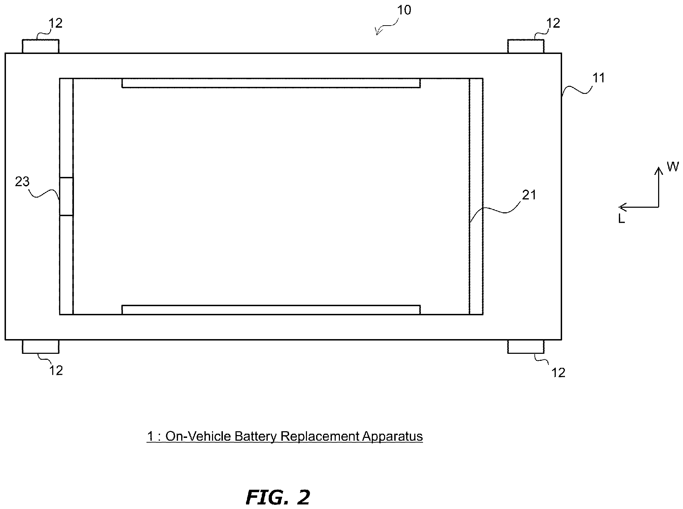

FIG. 1 is a view of the cart 10 as seen from above, and FIG. 2 is a view of the cart 10 as seen from below. The horizontal direction in the drawing corresponds to the front-to-rear direction of the cart 10, and the vertical direction corresponds to the left-to-right direction of the cart 10. The cart 10 is provided with a frame 11, on which a battery pack 20 of the on-vehicle battery can be mounted. The frame 11 has a plate shape with a hole inside, and the battery pack 20 is held in the hole.

The battery pack 20 includes a storage case. The storage case includes an upper case and a lower case. The lower side of the battery pack 20 is covered with a protection panel 21 to protect the battery from flying stones and the like while it is mounted on the vehicle. The protection panel 21 is arranged so as to cover the lower case from the lower side. The battery pack 20 can be mounted on the frame 11 of the cart 10 while the battery pack 20 is in the protection panel 21. The cart 10 is also provided with wheels 12 and can move forward, backward, left, or right.

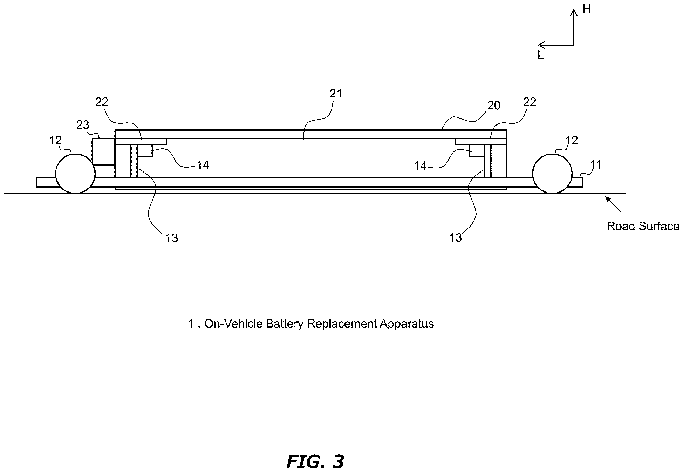

FIG. 3 is a side view of the cart 10. The horizontal direction of the drawing corresponds to the front-to-rear direction of the cart 10, and the vertical direction of the drawing corresponds to the height direction of the cart 10. The cart 10 is provided with a lift mechanism (lift) 13 for raising and lowering the battery pack 20 when the on-vehicle battery is replaced. An attachment/detachment mechanism 14 for attaching and detaching the on-vehicle battery is provided on the upper part of the lift mechanism 13. A portion of the protection panel 21 has a convex shape as seen from above, and the convex shape acts as a hold unit 22 for holding the battery pack 20 attached to the vehicle. While the on-vehicle battery is mounted on the cart 10, the attachment/detachment mechanism 14 supports the hold unit 22, thereby allowing the protection panel 21 and the battery pack 20 to be held on the cart 10. As shown in the figure, a connector 23 of the on-vehicle battery is provided on the front side of the battery pack 20, and connectors can be fitted to each other by inserting the connector of the vehicle from the front.

### 2. Operation of On-Vehicle Battery Replacement Apparatus

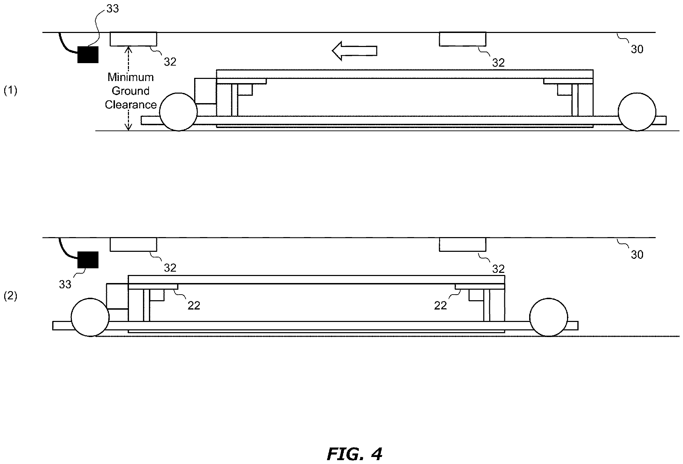

Next, the movement of the cart 10 when the on-vehicle battery is replaced will be described with reference to FIGS. 4 to 6. FIGS. 4 to 6 show side views of the cart 10. In FIGS. 4 to 6, some reference numerals which are not used in the description are omitted.

In step (1), the cart 10 moves in the direction of the arrow and gets under the floor of a vehicle 30.

In step (2), the cart 10 stops before a fix position. A fix unit 32 for fixing the on-vehicle battery is provided on the bottom surface of the body of the vehicle 30. The fix position is a position where the hold unit 22 of the protection panel 21 and the fix unit 32 are fitted.

In step (3), the battery pack 20 is lifted together with the protection panel 21 by the lift mechanism 13. The lift mechanism 13 lifts the battery pack 20 to a height where the heights of the connector 23 and the connector 33 are approximately aligned so that the connector 23 of the on-vehicle battery and the connector 33 of the vehicle can be fitted to each other.

In step (4), the cart 10 moves forward. As the cart 10 moves, the connector 33 of the vehicle is inserted into the connector 23 of the on-vehicle battery. Also, the hold unit 22 of the protection panel 21 moves to a position where it can be joined to the fix unit 32, that is, to a position where the positions of the hold unit 22 and the fix unit 32 are approximately aligned as seen from the front-rear direction. Then, the attachment/detachment mechanism 14 fixes the hold unit 22 of the protection panel 21 to the fix unit 32 of the vehicle 30 while the protection panel 21 supports the battery pack 20. As a mechanism for fixing the protection panel 21 to the fix unit 32, arbitrary mechanism can be used. For example, a mechanism called a wedge plank mechanism, a push latch mechanism, a knock mechanism, a ball catch mechanism, or a free slide lock mechanism may be used, or the protection panel 21 may be fixed by a magnet.

When the battery pack 20 finished being fixed to the vehicle 30, the lift mechanism 13 is lowered to its initial position in step (5). The attachment/detachment mechanism 14 is also lowered together with the lift mechanism 13 to the initial position. Thereafter, the cart 10 moves forward as shown in step (6) and passes under the floor of the vehicle 30. In this way, the on-vehicle battery is attached to the vehicle. When detaching the on-vehicle battery from the vehicle 30, a reverse procedure is carried out. When detaching the battery, by the attachment/detachment mechanism 14 releasing fixing of the protection panel 21 to the vehicle 30, the on-vehicle battery can be detached from the vehicle 30 while the protection panel 21 is joined to it. In this way, the on-vehicle battery can be attached and detached, and the battery can be replaced.

### 3. Features of On-Vehicle Battery Replacement Apparatus

Features of the on-vehicle battery replacement apparatus 1 according to the embodiment is described.

As shown in the figures, according to the on-vehicle battery replacement apparatus 1, the connector 23 of the on-vehicle battery is located on the front side of the battery pack 20, and the connector 33 of the vehicle can be inserted into the connector 23 of the battery pack 20 from the front.

If the connector of the on-vehicle battery were located on the upper surface of the battery pack, the overall height of the cart when the on-vehicle battery is mounted would increase accordingly. Furthermore, if the connector of the vehicle is designed to be inserted from above the battery pack, it is necessary to leave some height clearance between the lowermost surface of the connector of the vehicle body and the uppermost surface of the battery pack mounted on the cart. Therefore, in order to ensure that the floor of the vehicle body is high enough relative to the cart, it would become necessary to provide a dedicated space for the cart to run under the road surface where the vehicle is parked, or to lift the vehicle body to raise the floor when the on-vehicle battery is replaced.

In contrast, according to the vehicle battery replacement apparatus 1 of the present embodiment, since the connector 23 of the on-vehicle battery is provided on the side of the battery pack 20, and the connector 33 of the vehicle is inserted horizontally, the on-vehicle battery can be replaced by simply moving the cart 10 with the on-vehicle battery mounted on it under the floor of the vehicle 30 without providing a dedicated space for the cart 10 or lifting the vehicle body. In this way, height constraints imposed by connectors can be eliminated.

The connector 23 of the on-vehicle battery may be provided on the rear side of the battery pack 20, and the connector 33 of the vehicle may be configured to be inserted from the rear. Alternatively, the connector 23 may be provided on either the left or right side of the battery pack 20, and the connector 33 of the vehicle may be configured to be inserted from the right or left side.

Furthermore, according to the on-vehicle battery replacement apparatus 1, the frame 11 of the cart 10 is not configured to support the battery pack 20 from the bottom surface. The frame 11 of the cart 10 has a plate-like structure with a hole inside, and by the hold unit 22 of the protection panel 21 being held by the attachment/detachment mechanism 14, the battery pack 20 is mounted on the cart 10 and is located in the hole. Then, when the battery pack 20 is mounted on the cart 10, the height is adjusted by the lift mechanism so that the lower surface of the battery pack 20 (the lower surface of the protection panel 21) is lower than the lower surface of the frame 11 as seen from the side, as shown in FIG. 3. This allows the overall height of the cart 10 to be kept low compared to when the battery pack 20 is supported from the bottom surface, thereby making it easier to make the cart 10 get under the floor of the vehicle 30 and replace the on-vehicle battery.

The upper surface of the hold unit 22 of the protection panel 21 is located lower than the upper surface of the battery pack 20, and the attachment/detachment mechanism 14 can support the hold unit 22 from below. The wheels 12 are selected to be of a size such that the upper portions of the wheels 12 are located lower than the upper surface of the battery pack 20 mounted on the cart 10. This allows the overall height of the cart 10 to be kept low when the battery pack 20 is mounted on it, and prevents the hold unit 22, wheels 12, and attachment/detachment mechanism 14 from restricting the height of the floor surface of the vehicle 30.

According to the vehicle battery replacement apparatus 1, the height of the cart 10 can also be reduced for the reasons described above, and the height of the cart 10 when the on-vehicle battery is mounted can be made lower than the lower surface of the fix unit 32. Since the fix unit 32 is configured to protrude toward the road surface from the floor of the vehicle 30, it can be said that the height of the cart 10 when mounting the on-vehicle battery can be made lower than the minimum ground clearance of the vehicle 30. The minimum ground clearance is the height from the flat ground to the lowest portion of the body of the vehicle 30 (here, the lower surface of the fix unit 32). This allows the cart 10 to get under the floor of the vehicle 30 without providing a dedicated space and to attach and detach the on-vehicle battery. By eliminating the need for a dedicated space, the size of the equipment can be reduced and costs can also be reduced. The cart 10 configured to be able to reduce its height may be called a low-height cart.

Furthermore, the on-vehicle battery replacement apparatus 1 can attach the battery pack 20 together with the protection panel 21 to the vehicle 30. Similarly, when the battery pack 20 is detached, the battery pack 20 can be detached from the vehicle together with the protection panel 21. In other words, the on-vehicle battery can be replaced without detaching the protection panel 21 from the battery pack 20. This reduces the effort required to replace the on-vehicle battery and shortens the time required for replacement.

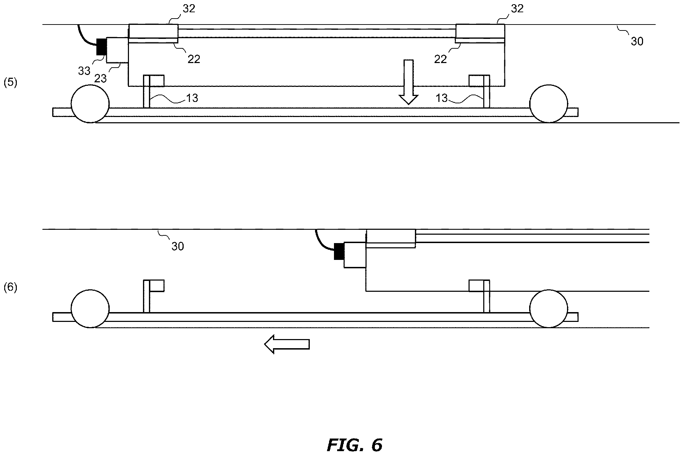

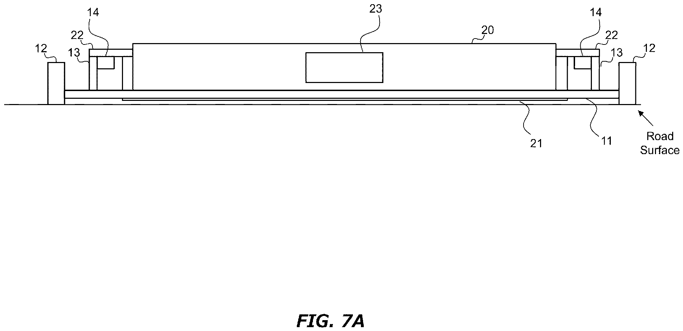

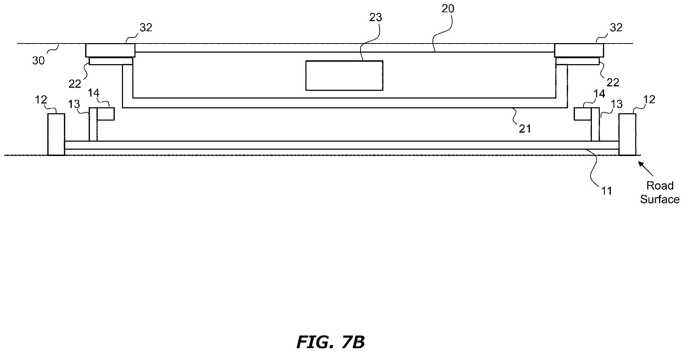

FIGS. 7A and 7B show the cart 10 as seen from the front. FIG. 7A shows a situation when the on-vehicle battery is being transported, that is, a situation corresponding a state from step (1) to step (2) in FIG. 4. FIG. 7B shows a situation when the cart 10 passes under the floor of the vehicle 30 after the on-vehicle battery has been fixed to the vehicle 30, that is, a situation corresponding to a state of step (6) in FIG. 6.

As shown in FIGS. 7A and 7B, the lift mechanism 13 and the attachment/detachment mechanism 14 are arranged so as to be located outside the battery pack 20 and the protection panel 21 in the width direction. Furthermore, when the on-vehicle battery is mounted on the vehicle 30, the upper surface of the frame 11 is located lower than the lower surface of the battery pack 20 (protection panel 21). Therefore, after the on-vehicle battery is attached to the vehicle 30 and the lift mechanism 13 is lowered, the cart 10 can pass under the floor of the vehicle 30 by simply traveling forward. In this way, the on-vehicle battery can be replaced smoothly.

### 4. Modifications

### 4-1. First Modification

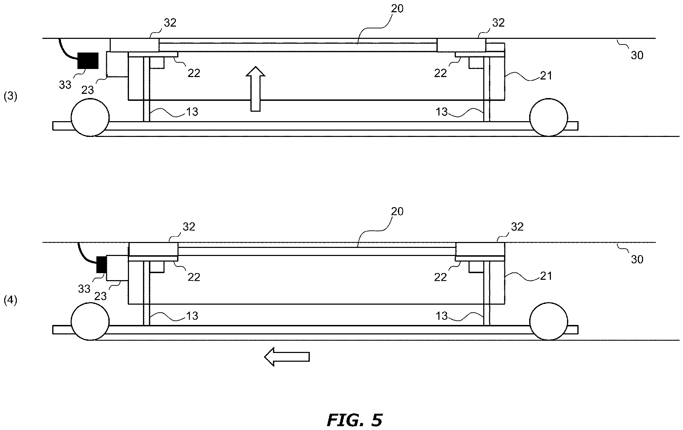

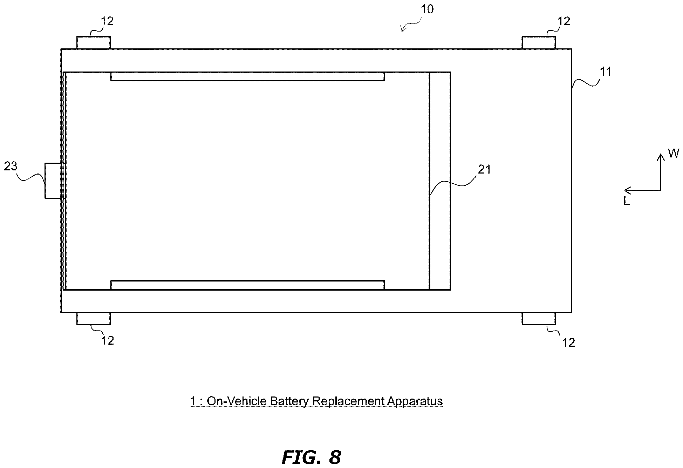

There may be modifications of the on-vehicle battery replacement apparatus 1 as follows. FIG. 8 shows the first modification. In the first modification, the frame 11 is configured so that the connector 23 is located at the frontmost position of the cart 10. In other words, the hole shape in the frame 11 for mounting the battery pack 20 is located further forward in the cart 10 than in the embodiment of FIG. 2, and the structure is such that when the battery pack 20 is mounted on the cart 10, the frame of the cart 10 is not positioned forward of the connector 23. When the on-vehicle battery is replaced, as in step (1) to (3) of FIGS. 4 and 5, the cart 10 enters under the floor from the rear of the vehicle 30, and by raising the lift mechanism 13, it attaches the battery pack 20 and the protection panel 21 to the vehicle 30, and it fits the connector 23 of the battery and the connector 33 of the vehicle to each other. Then, the lift mechanism 13 is lowered to the initial position. Thereafter, unlike in FIG. 6, the cart 10 moves backward to get out from under the floor of the vehicle 30. In the first modification, the cart 10 does not pass under the floor of the vehicle 30, so restrictions on the positional relationship between the connector and the cart 10 when replacing the on-vehicle battery can be reduced.

### 4-2. Parking Space of Vehicle

The on-vehicle battery is attached to and detached from the vehicle 30 by the on-vehicle battery replacement apparatus 1 while the vehicle 30 is parked. As described above, according to the vehicle battery replacement apparatus 1, since the overall height of the cart 10 can be kept low, the on-vehicle battery can be attached or detached by running the cart 10 under the floor of the vehicle 30 without lifting the vehicle 30. However, in order to facilitate the replacement of the on-vehicle battery, a step may be provided at a parking space of the vehicle 30 using a movable plate.

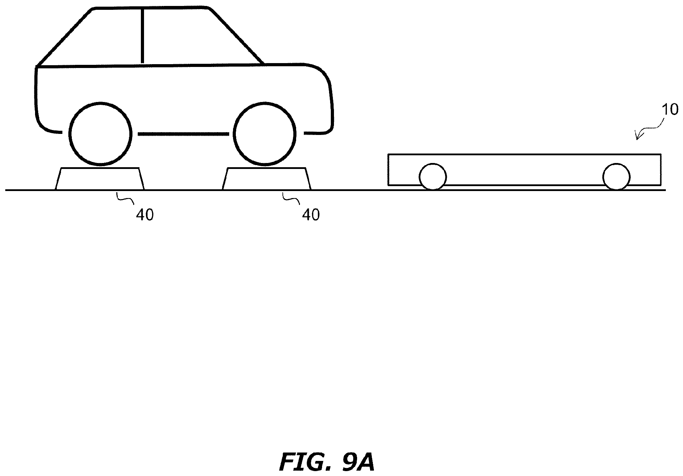

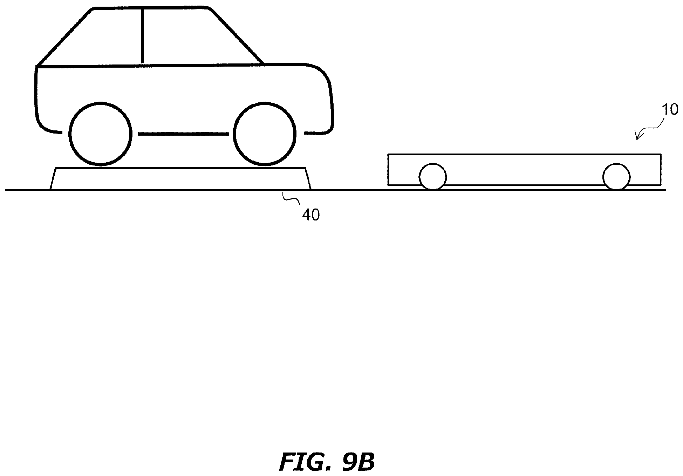

FIGS. 9A and 9B show two examples in which a step is provided in the parking space of the vehicle 30 by a movable plate. In the example of FIG. 9A, one step plate 40 is provided under each wheel of the vehicle 30. In the example of FIG. 9B, a step plate 40 large enough to mount both the front and rear wheels of the vehicle 30 at the same time is provided in the parking space of the vehicle 30. The step plate 40 can be moved to suit the position and the size of the vehicle 30, and can also be removed if not required.

The on-vehicle battery replacement apparatus 1 attaches and detaches the on-vehicle battery while the vehicle 30 is placed on the step plate 40. The step plate 40 can raise the height of the floor of the vehicle 30, so that the available range of heights for the cart 10 can be widened, and the battery can be smoothly replaced even when the vehicle height of the vehicle 30 is low.

## Claims

1. A replacing method for replacing an on-vehicle battery, the replacing method comprising:
mounting the on-vehicle battery on a low-height cart (10) that has a height, when the on-vehicle battery is mounted, lower than a minimum ground clearance of a vehicle (30); and
moving the low-height cart (10) mounting the on-vehicle battery to under a floor of the vehicle and replacing the on-vehicle battery.

2. The replacing method according to claim 1, wherein
a height of the low-height cart (10) when mounting the on-vehicle battery is lower than a lower surface of a fix portion (32) for fixing the on-vehicle battery to the vehicle (30).

3. The replacing method according to claim 1, wherein
when the on-vehicle battery is mounted on the low-height cart (10), a lower surface of the on-vehicle battery is located lower than a lower surface of a cart frame (11) of the low-height cart (10).

4. The replacing method according to claim 1, wherein
when the on-vehicle battery is mounted on the low-height cart (10), upper ends of wheels (12) of the low-height cart (10) are located below an upper surface of the on-vehicle battery.

5. The replacing method according to claim 1, wherein
the low-height cart (10) is equipped with a lift (13) for lifting the on-vehicle battery, and
when the on-vehicle battery is mounted on the low-height cart (10), an upper end of the lift (13) is located below an upper surface of the on-vehicle battery.

6. The replacing method according to claim 5, wherein
a battery-side connector (23) of the on-vehicle battery is provided on a front side surface of the on-vehicle battery, and
the replacing method includes inserting a vehicle-side connector (33) of the vehicle (30) into the battery-side connector (23) by moving the low-height cart (10) forward while lifting the on-vehicle battery by the lift (13).

7. The replacing method according to claim 1, wherein
the on-vehicle battery is mounted on the low-height cart (10) while covered with a protection panel (21), and
the replacing method includes moving the low-height cart (10) mounting the on-vehicle battery to under a floor of the vehicle (30) and replacing the on-vehicle battery without removing the protection panel (21) from the on-vehicle battery.

8. A cart (10) used for replacing an on-vehicle battery, wherein
the cart (10) is configured to have a height lower than a minimum ground clearance of the vehicle (30) when mounting the on-vehicle battery.

9. An on-vehicle battery replacement apparatus comprising an on-vehicle battery and a cart (10) according to claim 8, wherein
the cart (10) is equipped with a lift for lifting the on-vehicle battery.
